# EUROPEAN PATENT APPLICATION

(11) **EP 3 547 522 A1**
(43) Date of publication of application: **02.10.2019**
(21) Application number: 17873267.3
(22) Date of filing: 28.02.2017
(51) Int. Cl.: H02M 5/458

(54) **SMART BOOST CONVERSION DEVICE WITH LONG SERVICE LIFE**

(30) Priority: 25.11.2016 CN 201611061767
(71) Applicant: Guangdong BESTEK E-commerce Co., Ltd, Shenzhen, Guangdong 518102 (CN)
(72) Inventor: LIAO, Zhigang, Shenzhen, Guangdong 518102 (CN)
(74) Representative: LLR
(86) International application number: PCT/CN2017/075079
(87) International publication number: WO 2018/094898

(57) **Abstract**

The present application discloses a smart step-up converter with long life service comprising a high-frequency modulation unit, an inductance filtering unit and an inverting paraphase unit, wherein: the high-frequency modulation unit includes a storage inductor and a first switching tube, the storage inductor has a back end connected to the drain of the first switching tube and the anode of the freewheel diode, the source of the first switching tube is earthed and the grid of the first switching tubes is connected with PWM pulse signals; the inductance filtering unit includes a filtering inductor having a front end connected to the cathode of the freewheel diode and a back end connected to a inverting paraphase unit; the inverting paraphase unit is configured to invertedly convert a DC pulse voltage outputted from the back end of the filter inductor to a sine AC voltage. The smart step-up converter with long life service according to the present application can achieve step-up conversion without electrolytic capacitors, improve the service life and the PF value, and moreover is easy to carry and can avoid interference to the power grid.

## Description

### TECHNICAL FIELD

The present application generally relates to voltage converters field, and especially relates to a smart step-up converter with long life service and without electrolytic capacitors.

### BACKGROUND

The sine wave step-up converter, also known as a step-up travel platooninsert, is a sine wave AC/AC converter, where the function of step-up and stable voltage and frequency can be realized in the AC/AC transformation process. At present, most AC/AC portable devices in the market output modified waves, the voltage is firstly rectified to a DC voltage by a step-up circuit, secondly filtered by an aluminum electrolytic capacitor, thirdly stepped up by the BOOST and finally inverted. However, the voltage output from this kind of step-up conversion device is mostly modified wave, which is quite harmful to electrical devices. Meanwhile, mostly, it is filtered with aluminum electrolytic capacitors, which seriously results in lower span-life, lower safety and lower reliability of products. Moreover, this kind of step-up converter has a low PF value, which is easy to interfere with the power grid.

### SUMMARY

The technical problem to be solved by the present application is to provide a smart step-up converter with long life service which is easy to carry without electrolytic capacitors and can improve the service life, achieve a higher PF value and avoid interference to the power grid.

The following technical scheme is used for solving the above-mentioned problem.

A smart step-up converter with long life service is provided, comprising a high-frequency modulation unit, an inductance filtering unit and an inverting paraphase unit, wherein the high-frequency modulation unit comprises a storage inductor, a first switching tube and a freewheel diode, wherein the storage inductor has a front end connected to an DC voltage and a back end connected to the drain of the first switching tube, the drain of the first switching tube is further connected to the anode of the freewheel diode, the source of the first switching tube is earthed and the grid of the first switching tubes is connected with PWM pulse signals; the inductance filtering unit comprises a filtering inductor and a filtering capacitor, wherein the filtering inductor has a front end connected to the cathode of the freewheel diode and a back end earthed via the filtering capacitor and further connected to a inverting paraphase unit, when the first switching tube is on-switched, the back end of the storage inductor is earthed by the first switching tube and starts to store energy, and when the first switching tube is off-switched, a voltage is produced at the back end of the storage inductor which is higher than that at the front end thereof due to the self-inductance effect of the storage inductor, the voltage at the back end of the storage inductor is rectified via the freewheel diode, filtered via the filtering inductor and the filtering capacitor to filter out the high-frequency wave, and then transmitted to the inverting paraphase unit; the inverting paraphase unit is configured to invertedly convert a DC pulse voltage outputted from the back end of the filter inductor to a sine AC voltage.

Preferably, the smart step-up converter with long life service further comprises: an AC input unit connected to a mains voltage; a rectifying and filtering unit comprising an input terminal connected to the output terminal of the AC input unit and an output terminal connected to the front end of the storage inductor, the rectifying and filtering unit is configured to rectify and filter the mains voltage, and then to form the DC voltage to load to the front end of the storage inductor.

Preferably, the first switching tube is an N-channel MOS tube.

Preferably, the smart step-up converter with long life service further comprises an MCU controlling unit connected with the grid of the first switching tube and the control terminal of the inverting paraphase unit, and configured to output the PWM pulse signals to the first switching tube and controls the conversion frequency of the inverting paraphase unit.

Preferably, the smart step-up converter with long life service further comprises a AC sampling unit having an input terminal connected to the AC input unit and an output terminal connected to the MCU controlling unit, wherein the AC sampling unit is configured to collect a voltage value and a phase of the mains voltage and then transmit them to the MCU controlling unit, and the MCU controlling unit is configured: to determine whether the mains voltage is lower than a preset value according to the voltage value collected by the AC sampling unit, wherein if it is lower than the preset value, the PWM pulse signals are loaded to the grid of the first switching tube, and if it is not lower than the preset value, the first switching tube is maintained off-switched; to control the conversion frequency of the inverting paraphase unit according to the phase of the mains voltage collected by the AC sampling unit such that the inverting paraphase unit outputs the sine AC voltage having the same phase as that of the mains voltage.

Preferably, the AC sampling unit comprises an operational amplifier and a comparator, two input terminals of the operational amplifier are respectively connected to the live and zero lines of the AC input unit via their corresponding current-limiting sampling resistors, and the output terminal of the operational amplifier is connected to the MCU controlling unit so that the voltage value of the mains voltage is obtained after the MCU controlling unit calculating the voltage signal output from the operational amplifier.

Preferably, the output terminal of the operational amplifier is further connected to the anti-phased terminal of the comparator, the in-phased terminal of the comparator is connected to a reference voltage, and the output terminal of the comparator is connected to the MCU controlling unit, and the MCU controlling unit is configured for obtaining the phase of the mains voltage according to the voltage signal output from the comparator.

Preferably, the smart step-up converter with long life service further comprises a current sampling unit that comprises a current-limiting sampling resistor connected between the source of the first switching tube and the earth in series, and the current flows from the source of the first switching tube to the MCU controlling unit.

Preferably, the inverting paraphase unit comprises an inverter bridge comprising a third switching tube, a fourth switching tube, a fifth switching tube and a sixth switching tube, and wherein the grid of the third switching tube, the grid of the fourth switching tube, the grid of the fifth switching tube, and the grid of the sixth switching tube are respectively connected to the MCU controlling unit that is configured to control the third switching tube, the fourth switching tube, the fifth switching tube and the sixth switching tube to be on-switched or off-switched in order to the inverting paraphrase unit output the sine AC voltage.

In the smart step-up converter with long life service according to the present application, the front end of the storage inductor is configured to be connected to the pulsating DC voltage that may be provided by rectifying and filtering a mains voltage or be obtained in other manners. During on work, the first switching tube remains on-switched or off-switched by the grid of the first switching tube connected to the PWM pulse signals. When the first switching tube is on-switched, the DC voltage is transmitted through the storage inductor and the first switching tube in turn to the earth, and meanwhile the storage inductor starts to store energy. When the first switching tube is off-switched, the storage inductor generates the self-inductance by the voltage mutation, such that the voltage is produced at the back end of the storage inductor which is higher than that at the front end thereof. The voltage at the back end of the storage inductor is rectified via the freewheel diode, filtered via the filtering inductor to filter out the high-frequency wave, and then transmitted to the inverting paraphase unit. Under the control of the PWM pulse signals, the first switching tube is on-switched or off-switched repeatedly, such that the high pulsating DC voltage each time output from the storage inductor is transmitted to the inverting paraphase unit. In the process mentioned above, the on-switched time of the first switching tube can be adjusted by adjusting the duty ratio of the PWM pulse signals, such that the energy stored in the storage inductor is controlled. The more the energy stored in the storage inductor is, the higher the voltage output from the storage inductor is, so that the smart step-up conversion of the sine wave is realized. Based on the above mentioned principles, the smart step-up converter with long life service according to the present application can achieve step-up conversion without electrolytic capacitors, improves the service life and the PF value, and moreover is easy to carry and can avoid interference to the power grid.

### BRIEF DESCRIPTION OF THE DRAWINGS

FIG. 1 is a schematic circuit diagram of a smart step-up converter with long life service in accordance with an exemplary embodiment.
FIG. 2 is a schematic circuit diagram of an AC sampling unit of the smart step-up converter with long life service of FIG. 1.
FIG. 3 is a schematic circuit diagram of an MCU controlling unit of the smart step-up converter with long life service of FIG. 1.

### DETAILED DESCRIPTION

The present application would be described in greater detail with reference to the drawings and embodiments.

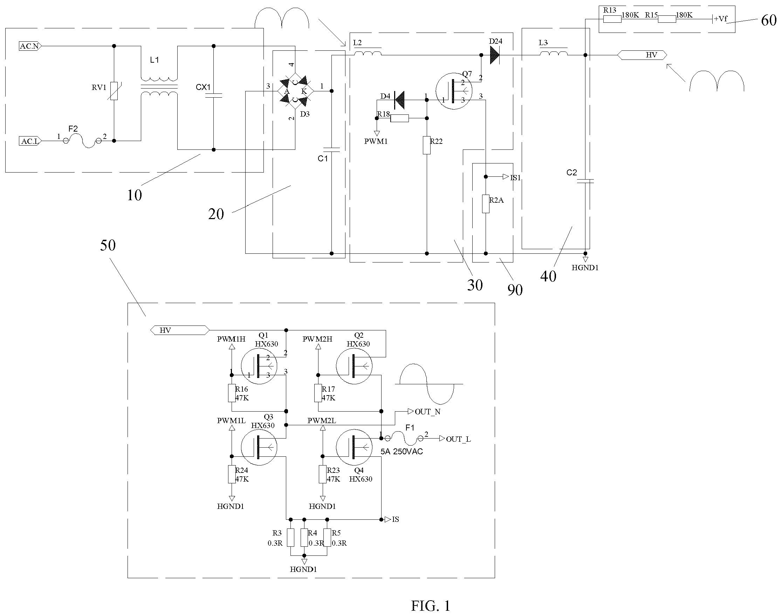

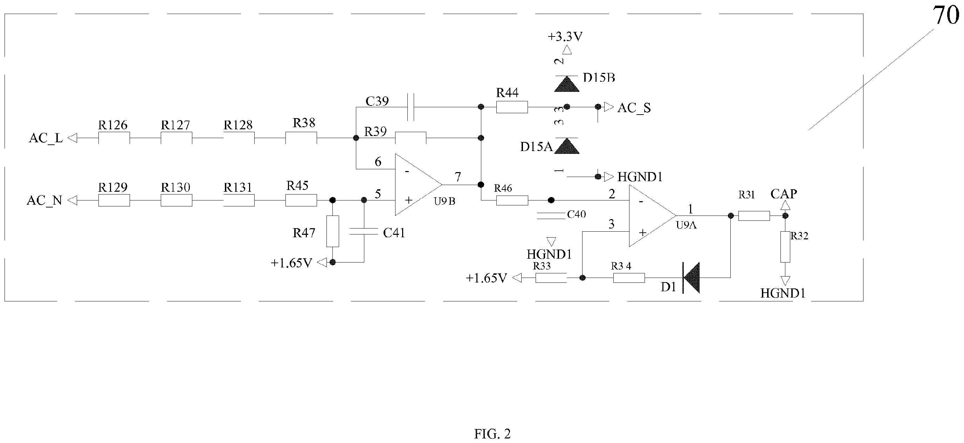

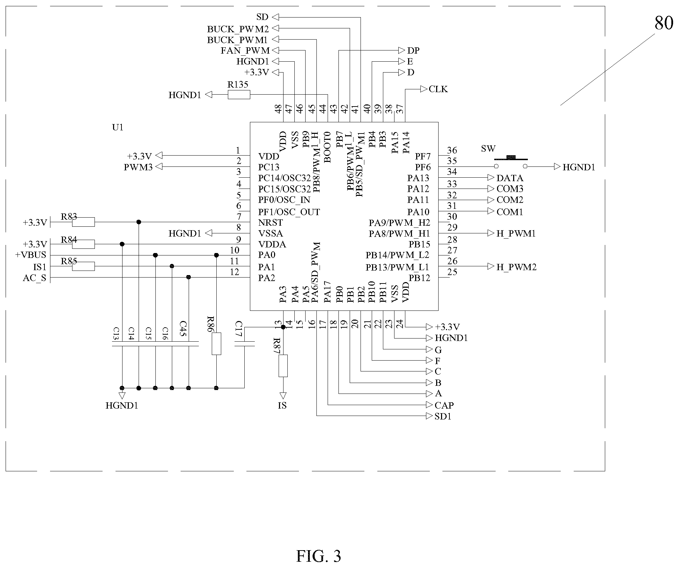

A smart step-up converter with long life service is disclosed in accordance with the present application, as is shown in Figs 1-3, including a high-frequency modulation unit 30, an inductance filtering unit 40 and an inverting paraphase unit 50.

The high-frequency modulation unit 30 includes a storage inductor L2, a first switching tube Q7 and a freewheel diode D24. The storage inductor L2 has a front end connected to a DC voltage, and a back end connected to the drain of the first switching tube Q7. The drain of the first switching tube Q7 is further connected to the anode of the freewheel diode D24, and the source of the first switching tube Q7 is earthed. The grid of the first switching tubes Q7 is connected with PWM pulse signals.

The inductance filtering unit 40 includes a filtering inductor L3 and a filtering capacitor C2. The filtering inductor L3 has a front end connected to the cathode of the freewheel diode D24 and a back end earthed via the filtering capacitor C2 and further connected to an inverting paraphase unit 50. When the first switching tube Q7 is on-switched, the back end of the storage inductor L2 is earthed by the first switching tube Q7 and starts to store energy. When the first switching tube Q7 is off-switched, a voltage is produced at the back end of the storage inductor L2 which is higher than that at the front end thereof due to the self-inductance effect of the storage inductor L2. The voltage at the back end of the storage inductor L2 is rectified via the freewheel diode D24, filtered via the filtering inductor L3 and the filtering capacitor C2 to filter out the high-frequency wave, and then transmitted to the inverting paraphase unit 50.

The inverting paraphase unit 50 is configured to invertedly convert a DC pulse voltage outputted from the back end of the filter inductor L3 to a sine AC voltage.

The working principle of the smart step-up converter with long life service mentioned above is as follows. The front end of the storage inductor L2 is configured to be connected to the pulsating DC voltage that may be provided by rectifying and filtering a mains voltage or be obtained in other manners. During on work, the first switching tube Q7 remains on-switched or off-switched by the grid of the first switching tube Q7 connected to the PWM pulse signals. When the first switching tube Q7 is on-switched, the DC voltage is transmitted through the storage inductor L2 and the first switching tube Q7 in turn to the earth, and meanwhile the storage inductor L2 starts to store energy. When the first switching tube Q7 is off-switched, the storage inductor L2 generates the self-inductance by the voltage mutation, such that the voltage is produced at the back end of the storage inductor L2 which is higher than that at the front end thereof. The voltage at the back end of the storage inductor L2 is rectified via the freewheel diode D24, filtered via the filtering inductor L3 to filter out the high-frequency wave, and then transmitted to the inverting paraphase unit 50. Under the control of the PWM pulse signals, the first switching tube Q7 is on-switched or off-switched repeatedly, such that the high pulsating DC voltage each time output from the storage inductor L2 is transmitted to the inverting paraphase unit 50. In the process mentioned above, the on-switched time of the first switching tube Q7 can be adjusted by adjusting the duty ratio of the PWM pulse signals, such that the energy stored in the storage inductor L2 is controlled. The more the energy stored in the storage inductor L2 is, the higher the voltage output from the storage inductor L2 is, so that the smart step-up conversion of the sine wave is realized. Based on the above mentioned principles, the smart step-up converter with long life service according to the present application can achieve step-up conversion without electrolytic capacitors, improve the service life and the PF value, and moreover is easy to carry and can avoid interference to the power grid.

In the exemplary embodiment of the present application, the DC voltage is preferably the voltage after the mains voltage is rectified and filtered. The smart step-up converter with long life service further includes:
an AC input unit 10 connected to a mains voltage;
a rectifying and filtering unit 20 including an input terminal connected to the output terminal of the AC input unit 10 and an output terminal connected to the front end of the storage inductor L2, the rectifying and filtering unit 20 is configured to rectify and filter the mains voltage, and then to form the DC voltage to load into the front end of the storage inductor L2.

Referring to FIG. 1, in the exemplary embodiment of the present application, the input side of the high-frequency modulation unit 30 is accessed to a half-wave pulsating DC voltage by using the rectification function of the rectifying and filtering unit 20. After the DC voltage is processed by the high-frequency modulation unit 30 and the inductance filtering unit 40, the half-wave pulsating DC voltage remains being transmitted to the inverting paraphase unit 50. A sine AC voltage is formed after the inverting paraphase unit 50 inverting only one half-wave of two adjacent half-waves. Comparing to the prior art that filters an input voltage into a smooth DC voltage by means of the electrolytic capacitors and then converts the smooth DC valtag to an AC voltage, the present application can obtain the AC voltage only by the inverting phase process, where the conversion efficiency is greatly improved.

In the exemplary embodiment of the present application, the first switching tube Q7 is an N-channel MOS tube.

Referring to FIGS. 1-3, in order to better realize smart control, the smart step-up converter with long life service further includes an MCU controlling unit 80. The grid of the first switching tube Q7 and the control terminal of the inverting paraphase unit 50 are connected to the MCU controlling unit 80. The MCU controlling unit 80 is configured to output the PWM pulse signals to the first switching tube Q7 and controls the conversion frequency of the inverting paraphase unit 50. Furthermore, the MCU controlling unit 80 includes a single-chip microcomputer U1 and its peripheral circuit.

In the practical use, in terms of the travel platooninserts, the step-up conversion is required only when the travel platooninserts are applied to the environment of lower mains voltage. Therefore, it is necessary to sample and determine the AC voltage. In order to conveniently sample the mains voltage, the smart sine wave step-up converter according to the present embodiment further includes an AC sampling unit 70 having an input terminal connected to the AC input unit 10 and an output terminal connected to the MCU controlling unit 80. The AC sampling unit 70 is configured to collect a voltage value and a phase of the mains voltage and then transmit them to the MCU controlling unit 80. The MCU controlling unit 80 is configured:
to determine whether the mains voltage is lower than a preset value according to the voltage value collected by the AC sampling unit 70, wherein if it is lower than the preset value, the PWM pulse signals are loaded to the grid of the first switching tube Q7, and if it is not lower than the preset value, the first switching tube Q7 is maintained off-switched.
to control the conversion frequency of the inverting paraphase unit 50 according to the phase of the mains voltage collected by the AC sampling unit 70 such that the inverting paraphase unit 50 outputs the sine AC voltage having the same phase as that of the mains voltage.

With respect to the specific composition of the AC sampling unit 70, the AC sampling unit 70 includes an operational amplifier U9B and a comparator U9A, two input terminals of the operational amplifier U9B are respectively connected to the live and zero lines of the AC input unit 10 via their corresponding current-limiting sampling resistors, and the output terminal of the operational amplifier U9B is connected to the MCU controlling unit 80 so that the voltage value of the mains voltage is obtained after the MCU controlling unit 80 calculating the voltage signal output from the operational amplifier U9B. The output terminal of the operational amplifier U9B is also connected to the anti-phased terminal of the comparator U9A, the in-phased terminal of the comparator U9A is connected to a reference voltage, and the output terminal of the comparator U9A is connected to the MCU controlling unit 80. The MCU controlling unit 80 is configured for obtaining the phase of the mains voltage according to the voltage signal output from the comparator U9A.

In the AC sampling unit 70 mentioned above, the phase sample is performed while the mains AC voltage is subjected to voltage sampling. Based on the change of the phase, the MCU controlling unit 80 can correspondingly control the conversion frequency of the inverting paraphase unit 50 so that the inverse voltage output from the inverting paraphase unit 50 has the same phase as that of the mains AC voltage, thereby achieving a higher PF value and reducing interference to the power grid.

In order to achieve an output sample, a current sampling unit 90 is provided according to the embodiment, comprising a current-limiting sampling resistor R2A that is connected between the source of the first switching tube Q7 and the earth in series. The current flows from the source of the first switching tube Q7 to the MCU controlling unit 80. Further, a voltage sampling unit 60 is provided according to the embodiment, which is configured to collect the voltage at the back end of the filtering inductor L3 and transmit it to the MCU controlling unit 80.

Preferably, the voltage at the back end of the storage inductor L2 is rectified via the freewheel diode D24, filtered via the filtering inductor L3 to filter out the high-frequency wave, and then transmitted to the inverting paraphase unit 50. The freewheel diode D24 is used to provide a self-inductive voltage produced at the back end of the storage inductor L2 to the filtering inductor L3 and the inverter bridge for power supply when the first switching tube Q7 is off-switched, and to block a reverse current as soon as the first switching tube Q7 is on-switched such that the reverse current is prevented from being generated by the filter inductor L3, thereby achieving the rectification performance.

With respect to the composition of the inverting paraphase unit 50, the inverting paraphase unit 50 includes an inverter bridge comprising a third switching tube Q1, a fourth switching tube Q2, a fifth switching tube Q3 and a sixth switching tube Q4. The grid of the third switching tube Q1, the grid of the fourth switching tube Q2, the grid of the fifth switching tube Q3, and the grid of the sixth switching tube Q4 are respectively connected to the MCU controlling unit 80. The MCU controlling unit 80 is configured to control the third switching tube Q1, the fourth switching tube Q2, the fifth switching tube Q3 and the sixth switching tube Q4 to be on-switched or off-switched in order to the inverting paraphrase unit 50 output the sine AC voltage.

The above-described units are integrated to form a preferred embodiment of the present application. The overall operation of the preferred embodiment is shown in FIGS. 1-3.

The grid voltage is input to a filtering circuit via an AC socket, an insurance F2, a lightning protection resistor RV1, a common mode suppression inductor L1 and a group filtering circuits CX1. The rectifying filtering circuit comprises D3 and C1, where the input AC voltage is rectified into the half-wave AC voltage via D3, filtered via C1, and transmitted to the high-frequency modulation unit. The filtered voltage via C1 remains to be a half-wave pulsating voltage as C1 has a small capacity. The single-chip microcomputer U1 determines a working state of the high-frequency modulation circuit by an AC input voltage sampling circuit including R126, R127, R128, R38, R129, R130, R131, R45, C39, R39, R47, C41, U9, R44 and D15, and an AC input phase sampling circuit including R46, C40, R33, R34, D1, R31, R32. If the input voltage is lower than AC230V, the high-frequency modulation circuit would be on-switched; if the input voltage is higher than or equal to AC230V, the high-frequency modulation circuit would be off-switched.

As the step-up key part, the high-frequency modulation circuit includes the storage inductor L2 (for step-up conversion), the first switching tube Q7 (e.g. switching MOS tube) and the freewheel diode D24. When the input grid voltage is lower than 230V, the single-chip microcomputer U1 outputs high-frequency control signals PWM1 to the gate of Q7 via D4, R8 and R22 of the driving circuit, and the half-wave pulsating voltage rectified by D3 is stepped-up by Q7 in a PFC step-up manner. Specifically, the principle of step-up is: when Q7 is on-switched, the current flows from C1 via the storage inductor L2 and the first switching tube Q7 to GND to form a loop, such that the storage inductor L2 stores energy; when Q7 is off-switched, an inductive electromotive force higher than the input voltage is generated from the storage inductor, and the inductive electromotive force is rectified to a unidirectional half-wave pulsating voltage by the freewheel diode D24 and then transmitted to the high-frequency filtering circuit to be filtered. Q7 controls the changes of duty ratio of the PWM1 signals according to the input grid voltage collected by the AC sampling circuit as the modulation fundamental wave. When the input grid voltage is higher than or equal to 230V, the single-chip microcomputer U1 off-switches the high-frequency modulation circuit, and Q7 does not work, and the rectified and filtered voltage is output via L2 and D24.

The high-frequency filter circuit includes L3 and C2. The high-frequency voltage and current rectified by Q7 are filtered by L3 and C2 to a half-wave AC voltage. If Q7 is not on work, the filtering circuit does not work, and the half-wave pulsating voltage rectified by D3 is directly transmitted. The voltage filtered by L3 passes through the voltage sampling circuit including R13, R15 and then is transmitted to the single-chip microcomputer U1 so that the duty ratio of the PWM signals of Q7 is determined by the single-chip microcomputer U1. That is to say, the high-frequency modulation circuit, the current sampling circuit, the filtering circuit and the voltage sampling circuit cooperatively form a closed loop to adjust the duty ratio of Q7 to achieve a stable filtering output voltage.

A current sampling unit is provided according to the present embodiment: a current detecting circuit includes R2A and the single-chip microcomputer U1, and the overcurrent protection action inside U1 would be activated when overcurrent occurs in Q7.

The inverting paraphase circuit includes Q1, Q2, Q3 and Q4. A first output half-wave AC voltage through the filtering inductor L3 passes through Q1 and Q4 and is given to the load. A second output half-wave AC voltage through the filtering inductor L3 passes through Q2 and Q3 and is given to the load. In this way, a complete frequency AC voltage is formed on the load. The PWM signals output from the single-chip microcomputer U1 are transmitted via the driving circuit, and then the PWM1H, PWM2H, PWM1L, PWM2L signals are respectively sent to their corresponding gate of Q1, Q2, Q3, Q4. The phase of the inverting paraphase circuit is locked according to the phase taken by the input sampling circuit, that is to say, the frequency and the phase of the inverting paraphase circuit are consistent with the frequency and the phase of the input voltage.

The smart step-up converter with long life service is disclosed with small volume, light weight and easy to carry, can automatically adjust its output voltage within the input full voltage range, and output the output voltage in a pure sinusoidal mode, which is of less damage to the load and has a strong compatibility. At the same time, the present application of the smart step-up converter with long life service does not use an aluminum electrolytic capacitor to filter, but using a CBB capacitor with long span-life, thereby the span-life of the product is improved. In addition, the output voltage can follow the changes of the AC power grid, thereby the smart step-up converter with long life service is of a high PF value and less interference to the power grid.

Although the features and elements of the present application are described as embodiments in particular combinations, each feature or element can be used alone or in other various combinations within the principles of the present application to the full extent indicated by the broad general meaning of the terms in which the appended claims are expressed.

## Claims

1. A smart step-up converter with long life service, comprising a high-frequency modulation unit, an inductance filtering unit and an inverting paraphase unit, wherein
the high-frequency modulation unit comprises a storage inductor, a first switching tube and a freewheel diode, wherein the storage inductor has a front end connected to an DC voltage and a back end connected to the drain of the first switching tube, the drain of the first switching tube is further connected to the anode of the freewheel diode, the source of the first switching tube is earthed and the grid of the first switching tubes is connected with PWM pulse signals;
the inductance filtering unit comprises a filtering inductor and a filtering capacitor, wherein the filtering inductor has a front end connected to the cathode of the freewheel diode and a back end earthed via the filtering capacitor and further connected to a inverting paraphase unit, when the first switching tube is on-switched, the back end of the storage inductor is earthed by the first switching tube and starts to store energy, and when the first switching tube is off-switched, a voltage is produced at the back end of the storage inductor which is higher than that at the front end thereof due to the self-inductance effect of the storage inductor, the voltage at the back end of the storage inductor is rectified via the freewheel diode, filtered via the filtering inductor and the filtering capacitor to filter out the high-frequency wave, and then transmitted to the inverting paraphase unit;
the inverting paraphase unit is configured to invertedly convert a DC pulse voltage outputted from the back end of the filter inductor to a sine AC voltage.

2. The smart step-up converter with long life service according to claim 1, **characterized in that**, the smart step-up converter with long life service further comprises:
an AC input unit connected to a mains voltage;
a rectifying and filtering unit comprising an input terminal connected to the output terminal of the AC input unit and an output terminal connected to the front end of the storage inductor, the rectifying and filtering unit is configured to rectify and filter the mains voltage, and then to form the DC voltage to load to the front end of the storage inductor.

3. The smart step-up converter with long life service according to claim 1, **characterized in that**, the first switching tube is an N-channel MOS tube.

4. The smart step-up converter with long life service according to claim 2, **characterized in that**, the smart step-up converter with long life service further comprises an MCU controlling unit connected with the grid of the first switching tube and the control terminal of the inverting paraphase unit, and configured to output the PWM pulse signals to the first switching tube and controls the conversion frequency of the inverting paraphase unit.

5. The smart step-up converter with long life service according to claim 4, **characterized in that**, the smart step-up converter with long life service further comprises a AC sampling unit having an input terminal connected to the AC input unit and an output terminal connected to the MCU controlling unit, wherein the AC sampling unit is configured to collect a voltage value and a phase of the mains voltage and then transmit them to the MCU controlling unit, and the MCU controlling unit is configured:
to determine whether the mains voltage is lower than a preset value according to the voltage value collected by the AC sampling unit, wherein if it is lower than the preset value, the PWM pulse signals are loaded to the grid of the first switching tube, and if it is not lower than the preset value, the first switching tube is maintained off-switched;
to control the conversion frequency of the inverting paraphase unit according to the phase of the mains voltage collected by the AC sampling unit such that the inverting paraphase unit outputs the sine AC voltage having the same phase as that of the mains voltage.

6. The smart step-up converter with long life service according to claim 5, **characterized in that**, the AC sampling unit comprises an operational amplifier and a comparator, two input terminals of the operational amplifier are respectively connected to the live and zero lines of the AC input unit via their corresponding current-limiting sampling resistors, and the output terminal of the operational amplifier is connected to the MCU controlling unit so that the voltage value of the mains voltage is obtained after the MCU controlling unit calculating the voltage signal output from the operational amplifier.

7. The smart step-up converter with long life service according to claim 6, **characterized in that**, the output terminal of the operational amplifier is further connected to the anti-phased terminal of the comparator, the in-phased terminal of the comparator is connected to a reference voltage, and the output terminal of the comparator is connected to the MCU controlling unit, and the MCU controlling unit is configured for obtaining the phase of the mains voltage according to the voltage signal output from the comparator.

8. The smart step-up converter with long life service according to claim 4, **characterized in that**, the smart step-up converter with long life service further comprises a current sampling unit that comprises a current-limiting sampling resistor connected between the source of the first switching tube and the earth in series, and the current flows from the source of the first switching tube to the MCU controlling unit.

9. The smart step-up converter with long life service according to claim 5, **characterized in that**, the inverting paraphase unit comprises an inverter bridge comprising a third switching tube, a fourth switching tube, a fifth switching tube and a sixth switching tube, and wherein the grid of the third switching tube, the grid of the fourth switching tube, the grid of the fifth switching tube, and the grid of the sixth switching tube are respectively connected to the MCU controlling unit that is configured to control the third switching tube, the fourth switching tube, the fifth switching tube and the sixth switching tube to be on-switched or off-switched in order to the inverting paraphrase unit output the sine AC voltage.
